# EUROPÄISCHE PATENTSCHRIFT

(11) **EP 3 363 030 B1**
(45) Veröffentlichungstag und Bekanntmachung des Hinweises auf die Patenterteilung: **01.06.2022**
(21) Anmeldenummer: 17705084.6
(22) Anmeldetag: 09.02.2017
(51) Int. Cl.: H01F 27/28, H01F 27/36, H01F 27/32, C09D 5/24

(54) **ELEKTRISCHEN WICKLUNG FUER EINEN TROCKENTRANSFORMATOR UND VERFAHREN ZUR HERSTELLUNG EINER ELEKTRISCHEN WICKLUNG FUER EINEN TROCKENTRANSFORMATOR**
ELECTRIC WINDING FOR A DRY-TYPE TRANSFORMER AND METHOD OF MANUFACTURING AN ELECTRIC WINDING FOR A DRY-TYPE TRANSFORMER
ENROULEMENT ELECTRIQUE POUR UN TRANSFORMATEUR DE TYPE SEC ET PROCEDE DE FABRICATION D'UN ENROULEMENT ELECTRIQUE POUR UN TRANSFORMATEUR DE TYPE SEC

(30) Priorität: 17.02.2016 DE 102016202385
(43) Veröffentlichungstag der Anmeldung: 22.08.2018
(73) Patentinhaber: Siemens Energy Global GmbH & Co. KG, 81739 München (DE)
(72) Erfinder: HOFMANN, Bernd, 73230 Kirchheim (DE); HÖNISCH, Benedikt, 91052 Erlangen (DE); MAI, Tim-Felix, 73240 Wendlingen (DE); SEIDEL, Christian, 90571 Schwaig (DE); WEINERT, Steffen, 73117 Wangen (DE)
(86) Internationale Anmeldenummer: PCT/EP2017/052908
(87) Internationale Veröffentlichungsnummer: WO 2017/140577

(56) Entgegenhaltungen:
- EP-A1- 3 144 944
- WO-A1-2012/152573
- FR-A1- 2 784 787
- GB-A- 1 156 369
- US-B2- 6 689 835

## Beschreibung

Die Erfindung betrifft die Beschichtung eines Isolierkörpers eines Trockentransformators.

Trockentransformatoren, insbesondere Gießharztransformatoren sind Leistungstransformatoren, die in der Energietechnik zur Transformation von Spannungen bis circa 36 kV auf der Oberspannungsseite eingesetzt werden. Bei solchen Transformatoren sind eine Unterspannungswicklung und eine Oberspannungswicklung koaxial um einen Schenkel eines Kerns angeordnet. Als Unterspannungswicklung wird dabei diejenige Wicklung mit der niedrigeren Spannung, als Oberspannungswicklung diejenige mit der höheren Spannung bezeichnet. Beide Wicklungen sind in ein festes Isoliermaterial eingebettet, im Fall der Oberspannungswicklung wird häufig ein Gießharz dafür verwendet. Solch ein Trockentransformator ist aus der EP 1133779 B1 bekannt.

Aus der noch nicht veröffentlichten EP 15185886 A1 (= internes Aktenzeichen 201519004) ist eine Weiterentwicklung des oben beschriebenen Trockentransformators, insbesondere auch für höhere Spannungen als 36 kV, bekannt. Darin wird eine kompaktere Bauweise des Trockentransformators offenbart, die sich unter anderem dadurch auszeichnet, dass der Trockentransformator kleinere Abmessungen hat, also kompakter gebaut ist und in diesem Zuge auch Luft als Isolator durch ein geeignetes Gießharz als festem Isolierkörper ersetzt wird.

Auf der Oberfläche des festen Isolierkörpers, in den eine elektrische Wicklung, also insbesondere eine zur Spule gewickelte Ober- und/oder Unterspannungswicklung, eingebettet ist, ist eine Beschichtung vorgesehen, die bevorzugt aus einem halbleitenden Material ist.

An die chemischen und/oder physikalischen Eigenschaften dieser halbleitenden Beschichtung werden besondere Ansprüche gestellt, insbesondere was thermische, mechanische und chemische Stabilität neben einem definierten Schichtwiderstand betrifft.

Aktuell werden Lacke mit mikroskaligen Füllstoffpartikeln, wie beispielsweise mit Leitruß, Leitgraphit und/oder beschichteten Glimmerpartikel eingesetzt. In der Regel sind es hochgefüllte Systeme mit Füllgraden mit weit über 10 Vol% bzw. 20Gew% und insbesondere über 30Gew%. Die Partikelgröße der Füllstoffe liegt dabei üblich im Bereich weniger Mikrometer aufwärts, weshalb hohe Mengen an Füllgehalt notwendig sind. Durch die hohen Füllgrade an mikroskaligen Füllstoffpartikeln verteuert sich die Beschichtung erheblich und wird auch schwieriger zu verarbeiten, weil die Fließfähigkeit der mit mikroskaligen Füllstoffpartikeln hochgefüllten Formulierungen schlechter ist als die der weniger hoch gefüllten. Auch die Anwendungseigenschaften verschlechtern sich bei hohen Füllgraden durch eine zunehmende Versprödung der Beschichtung.

GB 1 156 369 A und FR 2 784 787 A1 offenbaren jeweils eine elektrische Wicklung für einen Trockentransformator mit Wicklungsleiter, der in mehreren Windungen zu einer Spule gewickelt ist, wobei die Spule in einen festen Isolierkörper eingebettet ist, wobei auf zumindest einer Oberfläche des Isolierkörpers eine Beschichtung mit einem bestimmten Schichtwiderstand vorgesehen ist. WO 2012/152573 A1 und US 6 689 835 offenbaren jeweils einen elektrischen Leitlack, wobei der Leitlack Harz und nanoskaligen elektrisch leitenden Füllstoff aus Carbonnanotubes umfasst.

Es besteht der Bedarf, eine geeignete Formulierung für eine Beschichtung des Isolierkörpers eines Trockentransformators, die ein derartiges Eigenschaftsprofil erfüllt, aber einen reduzierten Gehalt an mikroskaligen Füllstoff, vorzugsweise keinen mikroskaligen Füllstoff, enthält, zur Verfügung zu stellen.

Daher ist es Aufgabe der Erfindung, eine elektrische Wicklung für einen Trockentransformator in kompakter Bauweise sowie ein Verfahren zur Herstellung einer Beschichtung für einen Isolierkörper einer solchen elektrischen Wicklung eines Trockentransformators in Kompaktbauweise anzugeben, wobei zumindest auf einer Oberfläche des Isolierkörpers die Beschichtung vorgesehen ist, deren Schichtwiderstand im Bereich von 10² bis 10⁵ Ohm/Square liegt und die eine hohe thermische Beständigkeit, eine hohe mechanische Robustheit und Beständigkeit gegen Umwelteinflüsse wie Feuchtigkeit und Sonneneinstrahlung zeigt.

Dazu wird erfindungsgemäß eine elektrische Wicklung gemäß Anspruch 1 vorgeschlagen.

Der Wicklungsleiter kann dabei ein Folienleiter, ein Bandleiter oder ein Drahtleiter sein. Die Spule ist in einen Isolierkörper aus einem festen Isoliermaterial eingebettet. Häufig wird hierfür ein Gießharz verwendet, mit dem die Spule umgossen wird und das nach dem Verguss ausgehärtet wird. Im Ergebnis erhält man eine mechanisch stabile Wicklung in Form eines Hohlzylinders, deren Spule gut vor Umwelteinflüssen geschützt ist. Erfindungsgemäß ist auf zumindest einer Oberfläche des Isolierkörpers eine Beschichtung wie in Anspruch 1 angegeben aufgebracht.

Ferner wird erfindungsgemäß ein Verfahren zur Herstellung einer elektrischen Wicklung gemäß Anspruch 11 vorgeschlagen.

Erfindungsgemäß liegt der Füllstoff in Form zumindest einer nanoskaligen Füllstofffraktion vor deren Füllstoffgehalt unter 20 Gew% und/oder unter 10 Vol% der Beschichtung ausmacht.

Nach einer bevorzugten Ausführungsform der Erfindung liegen in der Beschichtung zumindest zwei Füllstoffpartikelfraktionen vor.

Dabei ist es insbesondere vorteilhaft, dass ein definierter Schichtwiderstand durch die Menge und/oder das Material, in dem die zumindest eine nanoskalige Füllstofffraktion in der Beschichtung vorliegt, bestimmbar ist.

Andererseits kann der definierte Schichtwiderstand auch durch das Verhältnis zweier nanoskaliger Füllstofffraktionen, die in der Beschichtung vorliegen, bestimmbar sein.

Nach einer anderen Ausführungsform liegt eine nanoskaliger Füllstofffraktion in Kombination mit einer mikroskaligen Füllstofffraktion vor.

Die Beschichtung ist durch Aufbringen einer Formulierung herstellbar. Dabei wird eine verarbeitbare, also bevorzugt fließfähige Mischung aus einer ungehärteten Harzkomponente mit einem Härter, entweder als zwei getrennte Komponenten oder in einer Komponente vorliegend, mit Füllstoff versetzt und in Lösung auf eine Oberfläche aufgebracht. Anschließend wird diese Formulierung auf der Oberfläche, beispielsweise durch thermische und/oder UV-initiierte Reaktion, zur fertigen Beschichtung ausgehärtet.

Nach einer Ausführungsform liegt die Harzmatrix als 2-Komponentensystem aus Harz und Härter vor. Dabei ist insbesondere ein wasserlösliches 2-Komponentensystem vorteilhaft, weil damit bei der Herstellung der Beschichtung organische Lösungsmittel, die generell als umweltgefährdend angesehen werden, vermieden werden. Dabei können Härter- und/oder Harzkomponente in wässriger Lösung verarbeitet werden.

Besonders vorteilhaft ist es deshalb, wenn ein ein- oder zweikomponentiges Harzsystem eingesetzt wird, das umweltverträglich, insbesondere durch den Einsatz wasserbasierter Lösungsmittel, ist. Beispielsweise können durch den Einsatz eines wässrigen Polyurethan-Acrylatharzsystems weiterreichende ökologische Aspekte realisiert werden, wie der Verzicht auf Recycling oder Nachverbrennung des Lösungsmittels. Dabei kommt auch eine Erleichterung beim Arbeitsschutz für den Operator und/oder den Hersteller, wie beispielsweise einen Lackierer, zum Tragen.

Deshalb reichen erfindungsgemäß zur Herstellung der Formulierung, die zur Erzeugung der Beschichtung auf zumindest einer Oberfläche des Isolierkörpers aufgebracht wird, wasserbasierte Lösungsmittel aus.

In Fachkreisen und im Sinne der Erfindung wird ein Material als elektrisch leitfähig angesehen, wenn der elektrische Widerstand kleiner 10⁸ Ω/□ ist. Darüber gilt ein Material als Isolator oder als nicht leitend. Die Beschichtung sollte zumindest auf der Innenmantelfläche des Isolierkörpers aufgebracht sein, vorzugsweise auch auf den Stirnflächen. Besonders bevorzugt ist die Beschichtung auf der gesamten Oberfläche des Isolierkörpers aufgebracht, also neben der Innenmantelfläche und den Stirnflächen auch auf der Außenmantelfläche. Durch eine solche Beschichtung wird das elektrische Feld der elektrischen Wicklung weitgehend im Gießharz abgebaut und wird so außerhalb der Wicklung auf eine Größe reduziert, die es erlaubt, dass der Abstand zu anderen Bestandteilen des Transformators wie Kern oder Unterspannungswicklung dadurch geringer ausfallen kann, was eine kompaktere Bauweise ermöglicht.

Bevorzugt ist die Beschichtung aus einem halbleitenden Material. Als halbleitend wird ein Material in Fachkreisen und im Sinne der Erfindung angesehen, wenn sein spezifischer Widerstand kleiner als 10⁸ Ω/□ und größer als 10¹ Ω/□ ist. Da eine elektrisch leitfähige Beschichtung, insbesondere eine der gesamten Oberfläche, einer Wicklung eine Kurzschlusswicklung darstellt, wird in dieser ein Strom fließen, der eine Verlustleistung erzeugt. Mit einer Beschichtung aus einem halbleitenden Material kann diese Verlustleistung begrenzt werden.

Geeignete leitende oder halbleitende Beschichtungen basieren auf einem Harzsystem, in das ein nanoskaliger halbleitender Füllstoff eingearbeitet ist, vorteilhafterweise in einer Menge von weniger als 20 Gew% und/oder weniger als 10 Vol%.

Es hat sich gezeigt, dass beispielsweise ein zwei-komponentiges Harzsystem mit einer ersten Komponente, ausgewählt aus der Gruppe folgender Harze: Epoxid-, Polyurethan-, Acrylat-, Polyimid- und/oder Polyesterharzsystem, sowie beliebiger Mischungen, Copolymere und Blends der vorgenannten Harze dafür geeignet ist. Als zweite Komponente wird beispielsweise ein auf das jeweilige Harz abgestimmter Härter wie Amin, Säureanhydrid, Peroxid, Polyisocyanat, insbesondere aliphatisches Polyisocyanat, der Formulierung zugegeben. Verwendet ist eine wasserlösliche Härterkomponente wegen der Umweltverträglichkeit, weil dabei die Nachverbrennung des Lösungsmittels entfällt und generell der Einsatz organischer Lösungsmittel im Sinne der Nachhaltigkeit ökologisch nachteilig ist.

Die Formulierung hat eine gewisse Verarbeitungszeit, in der sie als unvernetzte Formulierung zur Beschichtung auf zumindest eine Oberfläche des Isolierkörpers aufgetragen wird. Die Auftragung erfolgt beispielsweise durch Spritzen, Sprühen, Streichen, Rollen und/oder durch Eintauchen. Nach dem Aushärten vernetzt die Formulierung und erreicht die Stabilität gegenüber Umwelteinflüssen, Sonneneinstrahlung, mechanischer Belastung etc. Die Vernetzung wird beispielsweise durch Erwärmung unterstützt.

Nach einer vorteilhaften Ausführungsform der Erfindung hat die Beschichtung eine Stabilität bei Temperaturen bis zu 170°C.

Um eine definierte elektrische Leitfähigkeit zur erreichen, wird der Formulierung ein nanoskaliger Füllstoff zugesetzt. Dieser liegt in der Formulierung in einer Menge von unter 20Gew%, bevorzugt von unter 15 Gew% und insbesondere bevorzugt von unter 10 Gew% der Trockenmasse der Formulierung oder in entsprechenden Volumenprozent unter 10 Vol% vor.

Als Füllstoff dient ein nanoskaliger Füllstoff, der zumindest in einer Dimension eine Länge kleiner 500nm, insbesondere kleiner 200nm und besonders bevorzugt kleiner 100nm hat.

Der Füllstoff kann alle Arten von Füllstoffpartikelformen umfassen. Beispielsweise können globulare mit plättchenförmigen Füllstoffen gemischt vorliegen. Bei sehr leichten Füllstoffpartikeln, die in Kombination oder allein in der Formulierung vorliegen, wird die Grenze von weniger als 20 Gew% durch die entsprechenden Volumenprozent, also beispielsweise ungefähr 10 Volumen% als Obergrenze angenommen.

Die Füllstoffpartikel sind Carbonnanotubes. Insbesondere multiwall-Carbonnanotubes haben sich als vorteilhaft erwiesen.

Durch den Einsatz der Nanopartikel ist es möglich, dass der Füllgrad an halbleitenden Füllstoffpartikeln im Harz bei der Einstellung eines elektrischen Widerstands im Bereich von 10³ Ω/□ bis 10⁴ Ω/□ auf Mengen unter 10 Gew% reduzierbar ist.

Die nanopartikulären Füllstoffe können multimodal kombiniert eingesetzt werden, das heißt in verschiedenen Füllstoffpartikelgrößen und/oder Füllstoffpartikelformen.

Die Dicke der Beschichtung liegt beispielsweise im Bereich von 1µm bis 5mm, bevorzugt im Bereich von 30pm bis 500pm, insbesondere im Bereich von 70pm bis 130pm.

Durch eine geeignete Wahl an Material der Füllstoffpartikel, Füllstoffpartikelgröße, Füllstoffpartikelform, Füllstoffpartikelstruktur, Korngrößenverteilung, Größe der spezifischen Oberfläche und/oder Oberflächenaktivität des Füllstoffs wird in der Beschichtung ein weitgefächertes Eigenschaftsprofil erzeugt.Erfindungsgemäß liegt der Anteil an nanoskaligem Füllstoff in der Beschichtung im Bereich unter 20 Gew%, jedoch kann dieser nanoskalige Füllstoff einer Partikelgröße von kleiner 500nm in zumindest einer Dimension beispielsweise auch mit mikroskaligem Füllstoff einer Größe von zumindest 1µm ergänzt werden. Dabei ist der Gehalt an mikroskaligem Füllstoff im Füllstoffgemisch beliebig, wobei bevorzugt kleine Mengen an mikroskaligem Füllstoff mit nanoskaligem Füllstoff kombiniert werden. Beispielsweise werden weniger als 50 Gew% oder einen entsprechenden Volumenprozentsatz im Falle leichter und mikroskaliger Füllstoffpartikel wie Hohlpartikel in der Formulierung mit nanoskaligem Füllstoff kombiniert.

Erfindungsgemäß weist die Beschichtung einen spezifischen Flächenwiderstand, auch Schichtwiderstand genannt, von 10² Ω/□ bis 10⁵ Ω/□, bevorzugt 10³Ω/□ bis 10⁴ Ω/□, auf. Diesen Flächenwiderstand weist die elektrische Wicklung im Neuzustand auf. Durch Alterung, Umwelteinflüsse oder Verschmutzung kann sich dieser verändern. Ein Flächenwiderstand dieser Größenordnung begrenzt einerseits die Verlustleistung besonders effektiv, bietet aber andererseits noch genügend Spielraum bei einer Reduktion des Flächenwiderstands durch Verschmutzung.

In einer bevorzugten Ausführung der Erfindung ist die Beschichtung durch Bepinseln und/oder ein Sprühverfahren aufgebracht. Insbesondere die Aufbringung durch Sprühen gewährleistet einerseits eine gleichmäßige Schichtdicke und verhindert andererseits Lufteinschlüsse, die zu Teilentladungen führen würden.

Er wird als vorteilhaft angesehen, wenn die Beschichtung elektrisch geerdet ist. Hierdurch wird das elektrische Feld außerhalb der Wicklung besonders effektiv reduziert.

Die Beschichtung kann dabei auf die gesamte Oberfläche oder nur auf Teile der Oberfläche des Isolierkörpers, wie bereits beschrieben, aufgebracht werden. Der Isolierkörper ist beispielsweise aus einem Epoxidharz, wobei eine bestimmte Oberflächenrauigkeit des Isolierkörpers auf den zu beschichtenden Seiten für die Haftung der Beschichtung auf der Oberfläche vorteilhaft ist.

Damit eine homogene Verteilung der Füllstoffpartikel optimiert ist, kann der Formulierung ein Dispergieradditiv, beispielsweise ein Tensid und/oder ein Additiv auf ionischer Basis zugesetzt sein.

Durch ein solches Verfahren ist eine elektrische Wicklung herstellbar, deren elektrisches Feld durch die Beschichtung weitgehend abgeschirmt wird, und die in einem Trockentransformator eingesetzt dadurch eine kompaktere Bauweise ermöglicht. Vorzugsweise ist die Beschichtung ein Lack. Das Aufbringen der Beschichtung kann dabei durch Spritzen, Sprühen, Streichen, Rollen und/oder als Tauchlackierung erfolgen. Dabei können mehrere der genannten Verfahren hintereinander oder gleichzeitig zur Aufbringung der Formulierung eingesetzt werden.

Nach einer vorteilhaften Ausführungsform des Verfahrens wird die Oberfläche des Isolierkörpers vor dem Aufbringen der Formulierung behandelt, so dass eine gute Haftung der Formulierung und anschließend der Beschichtung auf dem Isolierkörper gewährleistet sind.

Vorzugsweise ist die Beschichtung aus einem halbleitenden Material.

Besonders bevorzugt ist die Beschichtung in einem Sprühverfahren aufgebracht, wodurch sich eine besonders gleichmäßige Schichtdicke erreichen lässt.

Im Folgenden wird die Erfindung anhand einer Figur näher erläutert:

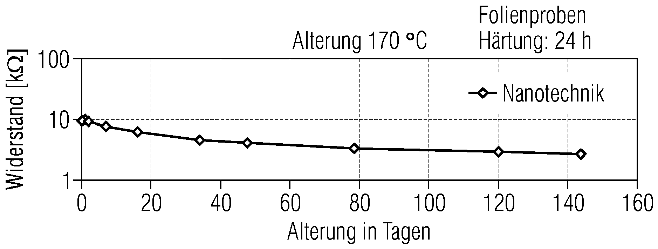

Figur 1 zeigt eine Graphik in der die Alterung einer halbleitenden Beschichtung gemäß der vorliegenden Erfindung innerhalb von 150 Tagen bei 170°C dargestellt ist. Nach einer Verfestigung der Beschichtung innerhalb der ersten Tage erkennt man eine stabile Beibehaltung des definierten Schichtwiderstands trotz der Lagerung bei 170°C während des gesamten Betrachtungszeitraumes von immerhin einem halben Jahr.

Im Folgenden wird die Herstellung einer beispielhaften Formulierung zur Herstellung einer Beschichtung nach einer Ausführungsform der Erfindung durch eine tabellarische Zusammenfassung näher erläutert:

**Beispiel:**

| | |
|---|---|
| Harzkomponente, beispielsweise Acrylat oder Polyurethan oder ein Polyurethan-Acrylatgemisch | 100g |
| Härterkomponente, beispielsweise Isocyanat oder Polyisocyanat | 36,69g |
| Nanoskaliger Füllstoff, beispielsweise CNTs | 9,77g |
| | |

In dem gezeigten Beispiel wird eine Formulierung mit nanoskaligem Füllstoff für eine Lackbeschichtung eines Trockentransformators in Kompaktbauweise angegeben, wobei die Kombination von umweltverträglicher Lacktechnologie durch wasserbasierte Härterkomponenten und die trotzdem erreichte Robustheit in mechanischer und thermischer Hinsicht, wie in Figur 1 belegt, die technische Innovation der hier gezeigten Formulierung, insbesondere beim Einsatz für Trockentransformatoren, belegt.

## Patentansprüche

1. Elektrische Wicklung , insbesondere Oberspannungswicklung für Spannungsbereiche bis zu 36kV, für einen Trockentransformator mit Wicklungsleiter, der in mehreren Windungen zu einer Spule gewickelt ist, wobei die Spule in einen festen Isolierkörper eingebettet ist, wobei die Spule und der Isolierkörper Teil der Wicklung sind, wobei auf zumindest einer Oberfläche des Isolierkörpers eine Beschichtung mit einem bestimmten Schichtwiderstand im Bereich von 10² Ω/□ bis 10⁵ Ω/□ vorgesehen ist, die Beschichtung durch Aufbringen einer Formulierung, die als Lösungsmittel Wasser enthält, herstellbar ist und eine Harzkomponente sowie zumindest einen nanoskaligen und elektrisch leitfähigen Füllstoff in einer Menge von unter 20 Gew% und/oder unter 10 Vol% umfasst, wobei der nanoskalige Füllstoff in einer Partikelgröße kleiner 500nm vorliegt und Carbonnanotubes, CNTs, umfasst.

2. Elektrische Wicklung nach Anspruch 1,
**dadurch gekennzeichnet,**
**dass** die Beschichtung die Oberfläche des Isolierkörpers vollständig bedeckt.

3. Elektrische Wicklung nach einem der vorstehenden Ansprüche,
**dadurch gekennzeichnet,**
**dass** die Beschichtung aus halbleitendem Material ist.

4. Elektrische Wicklung nach einem der vorstehenden Ansprüche,
**dadurch gekennzeichnet,**
**dass** die Beschichtung zumindest bimodal gefüllt ist, also zumindest zwei Füllstoffpartikelfraktionen in der Beschichtung vorliegen.

5. Elektrische Wicklung nach einem der vorstehenden Ansprüche,
**dadurch gekennzeichnet,**
**dass** der Oberflächenwiderstand der Beschichtung 10³Ω/□ bis 10⁴ Ω/□ beträgt.

6. Elektrische Wicklung nach einem der vorstehenden Ansprüche,
**dadurch gekennzeichnet,**
**dass** die Formulierung zur Erzeugung der Beschichtung durch ein Sprühverfahren aufbringbar ist.

7. Elektrische Wicklung nach einem der vorstehenden Ansprüche,
**dadurch gekennzeichnet,**
**dass** der nanoskalige Füllstoff Multiwall Carbonnanotubes, "MWCNTs", umfasst.

8. Elektrische Wicklung nach einem der vorstehenden Ansprüche,
**dadurch gekennzeichnet,**
**dass** die Beschichtung geerdet ist.

9. Elektrische Wicklung nach einem der vorstehenden Ansprüche,
**dadurch gekennzeichnet,**
**dass** durch die Einstellung des Verhältnisses zumindest zweier Füllstoffpartikelfraktionen in der Formulierung der definierte Schichtwiderstand der Beschichtung einstellbar ist.

10. Elektrische Wicklung nach einem der vorstehenden Ansprüche,
**dadurch gekennzeichnet, dass**
die Dicke der Beschichtung im Bereich von 1µm bis 5mm liegt.

11. Verfahren zu Herstellung einer elektrischen Wicklung für einen Trockentransformator mit den Verfahrensschritten:
- Wickeln eines Wicklungsleiters in mehreren Windungen zu einer Spule,
- Einbetten der Spule in einen festen Isolierkörper, bevorzugt durch Umgießen mit einem Gießharz und anschließendem Aushärten des Isolierkörpers,
- Herstellen einer Formulierung zur Erzeugung einer Beschichtung mit einem Schichtwiderstand von 10² bis 10⁵ Ohm/□,
- Aufbringen der Formulierung zur Erzeugung der Beschichtung auf zumindest einer Oberfläche des Isolierkörpers, wobei die Formulierung als wasserbasierte Lösung aufgebracht wird und die Beschichtung eine Harzkomponente sowie einen nanoskaligen und elektrisch leitfähigen Füllstoff in einer Menge von unter 20 Gew% und/oder unter 10 Vol% umfasst, wobei der nanoskalige Füllstoff in einer Partikelgröße kleiner 500nm vorliegt und Carbonnanotubes umfasst.

12. Verfahren nach Anspruch 11,
**dadurch gekennzeichnet,**
**dass** die Beschichtung auf die gesamte Oberfläche des Isolierkörpers aufgebracht wird.

13. Verfahren nach einem der Ansprüche 11 oder 12,
**dadurch gekennzeichnet,**
**dass** die Beschichtung aus einem halbleitenden Material ist.

14. Verfahren nach einem der Ansprüche 11 bis 13,
**dadurch gekennzeichnet,**
**dass** die Beschichtung durch Aufsprühen einer Formulierung und anschließender Härtung hergestellt wird.

15. Verfahren nach einem der Ansprüche 11 bis 14,
**dadurch gekennzeichnet,**
**dass** die Formulierung durch Lackieren, Spritzen, Streichen, Rollen und/oder als Tauchlackierung aufgebracht wird.

16. Verfahren nach einem der Ansprüche 11 bis 15,
**dadurch gekennzeichnet,**
**dass** der nanoskalige Füllstoff Multiwall Carbonnanotubes , "MWCNTs", umfasst.

## Claims

1. Electrical winding, especially high-voltage winding for voltage ranges up to 36 kV, for a dry transformer with a winding conductor wound in multiple windings to form a coil, said coil having been embedded in a solid insulation body, and said coil and said insulation body being part of the winding, wherein
a coating having a particular sheet resistance in the range from 10² Ω/□ to 10⁵ Ω/□ has been provided on at least one surface of the insulation body, the coating is producible by application of a formulation comprising water as solvent and comprises a resin component and at least one nanoscale and electrically conductive filler in an amount of less than 20% by weight and/or less than 10% by volume, wherein the nanoscale filler is present in a particle size of less than 500 nm and comprises carbon nanotubes, CNTs.

2. Electrical winding according to Claim 1,
**characterized in that**
the coating completely covers the surface of the insulation body.

3. Electrical winding according to either of the preceding claims,
**characterized in that**
the coating is composed of semiconductive material.

4. Electrical winding according to any of the preceding claims,
**characterized in that**
the coating has at least bimodal filling, i.e. at least two filler particle fractions are present in the coating.

5. Electrical winding according to any of the preceding claims,
**characterized in that**
the surface resistance of the coating is 10³ Ω/□ to 10⁴ Ω/□.

6. Electrical winding according to any of the preceding claims,
**characterized in that**
the formulation is applicable by a spraying method for production of the coating.

7. Electrical winding according to any of the preceding claims,
**characterized in that**
the nanoscale filler comprises multiwall carbon nanotubes, "MWCNTs".

8. Electrical winding according to any of the preceding claims,
**characterized in that**
the coating has been grounded.

9. Electrical winding according to any of the preceding claims,
**characterized in that**
the defined sheet resistance of the coating is adjustable via the setting of the ratio of at least two filler particle fractions in the formulation.

10. Electrical winding according to any of the preceding claims,
**characterized in that**
the thickness of the coating is in the range from 1 µm to 5 mm.

11. Process for producing an electrical winding for a dry transformer, comprising the process steps of:
- winding a winding conductor in multiple windings to form a coil,
- embedding the coil into a solid insulation body, preferably by encapsulating with a casting resin and subsequent curing of the insulation body,
- producing a formulation for creation of a coating with a sheet resistance of 10² to 10⁵ ohms/□,
- applying the formulation for creation of the coating to at least one surface of the insulation body, wherein the formulation is applied as a water-based solution and the coating comprises a resin component and at least one nanoscale and electrically conductive filler in an amount of less than 20% by weight and/or less than 10% by volume, wherein the nanoscale filler is present in a particle size of less than 500 nm and comprises carbon nanotubes.

12. Process according to Claim 11,
**characterized in that**
the coating is applied to the entire surface of the insulation body.

13. Process according to either of Claims 11 and 12,
**characterized in that**
the coating is composed of a semiconductive material.

14. Process according to any of Claims 11 to 13,
**characterized in that**
the coating is produced by spray application of a formulation and subsequent curing.

15. Process according to any of Claims 11 to 14,
**characterized in that**
the formulation is applied by painting, spraying, coating, rolling and/or in the form of a dip-coating.

16. Process according to any of Claims 11 to 15,
**characterized in that**
the nanoscale filler comprises multiwall carbon nanotubes, "MWCNTs".

## Revendications

1. Enroulement électrique, notamment enroulement de surtension pour des plages de tension allant jusqu'à 36 kV, d'un transformateur à sec, comprenant un conducteur d'enroulement, qui est enroulé en plusieurs spires en une bobine, la bobine étant incorporée dans un corps isolant solide, dans lequel la bobine et le corps isolant font partie de l'enroulement, dans lequel sur au moins une surface du corps isolant est prévu un revêtement ayant une résistance à couche définie dans la plage de 10² Ω/□ à 10⁵ Ω/□, le revêtement peut être produit par dépôt d'une formulation, qui contient de l'eau comme solvant et comprend un constituant de résine ainsi qu'au moins une charge à l'échelle nanométrique et conductrice de l'électricité en une quantité de moins de 20% en poids et/ou de moins de 10% en volume, la charge à l'échelle nanométrique se présentant dans une granulométrie plus petite que 500 nm et comprenant des nanotubes de carbone, CNT.

2. Enroulement électrique suivant la revendication 1,
**caractérisé**
**en ce que** le revêtement recouvre entièrement la surface du corps isolant.

3. Enroulement électrique suivant l'une des revendications précédentes,
**caractérisé**
**en ce que** le revêtement est un matériau semiconducteur.

4. Procédé électrique suivant l'une des revendications précédentes,
**caractérisé**
**en ce que** le revêtement est au moins bimodal en ayant ainsi au moins deux fractions de particules de charge dans le revêtement.

5. Procédé électrique suivant l'une des revendications précédentes,
**caractérisé**
**en ce que** la résistance de surface du revêtement va de 10³ Ω/□ à 10⁴ Ω/□.

6. Procédé électrique suivant l'une des revendications précédentes,
**caractérisé**
**en ce que** la formulation de production du revêtement peut être déposé par un procédé de pulvérisation.

7. Procédé électrique suivant l'une des revendications précédentes,
**caractérisé**
**en ce que** la charge à l'échelle nanométrique comprend des nanotubes de carbone multiwall « MWCNT ».

8. Procédé électrique suivant l'une des revendications précédentes,
**caractérisé**
**en ce que** le revêtement est mis à la terre.

9. Procédé électrique suivant l'une des revendications précédentes,
**caractérisé**
**en ce que** la résistance à couche définie du revêtement est réglable par le réglage du rapport d'au moins deux fractions de particules de charge de la formulation.

10. Procédé électrique suivant l'une des revendications précédentes,
**caractérisé en ce que**
l'épaisseur du revêtement est dans la plage allant de 1 µm à 5 mm.

11. Procédé de fabrication d'un enroulement électrique d'un transformateur à sec comprenant les stades de procédé :
- enroulement d'un conducteur d'enroulement en plusieurs spires en une bobine,
- incorporation de la bobine dans un corps isolant solide, de préférence en y coulant autour une résine de coulée et en durcissant ensuite le corps isolant,
- préparation d'une formulation de production d'un revêtement ayant une résistance à couche de 10² à 10⁵ Ohm/□,
- dépôt de la formulation pour la production du revêtement sur au moins une surface du corps isolant, dans lequel on dépose la formulation sous la forme d'une solution à base d'eau et le revêtement comprend un constituant de résine ainsi qu'une charge à l'échelle nanométrique et conductrice de l'électricité en une quantité de moins de 20% en poids et/ou de moins de 10% en volume, dans lequel la charge à l'échelle nanométrique est présente en une granulométrie plus petite que 500 nm et comprend des nanotubes de carbone.

12. Procédé suivant la revendication 11,
**caractérisé en ce que**
l'on dépose le revêtement sur toute la surface du corps isolant.

13. Procédé suivant l'une des revendications 11 ou 12,
**caractérisé en ce que**
le revêtement est en un matériau semiconducteur.

14. Procédé suivant l'une des revendications 11 à 13,
**caractérisé en ce que**
l'on produit le revêtement par pulvérisation d'une formulation et ensuite par durcissement.

15. Procédé suivant l'une des revendications 11 à 14,
**caractérisé en ce que**
l'on dépose la formulation par vernissage, par pulvérisation, par enduction, au rouleau et/ou sous la forme d'un vernissage par immersion.

16. Procédé suivant l'une des revendications 11 à 15,
**caractérisé en ce que**
la charge à l'échelle nanométrique comprend des nanotubes de carbone mutliwall « MWCNT ».
